# EUROPÄISCHE PATENTANMELDUNG

(11) **EP 1 653 018 A2**
(43) Veröffentlichungstag der Anmeldung: **03.05.2006**
(21) Anmeldenummer: 05109453.0
(22) Anmeldetag: 11.10.2005
(51) Int. Cl.: E03F 5/10, F16K 31/04

(54) **Drosseleinrichtung für Abwasserkanäle**

(30) Priorität: 14.10.2004 DE 202004015982 U; 04.03.2005 DE 202005003700 U; 18.03.2005 DE 202005004577 U; 17.05.2005 DE 202005007934 U
(71) Anmelder: Liebau, Lothar, 64732 Bad König (DE)
(72) Erfinder: Liebau, Lothar, 64732 Bad König (DE)
(74) Vertreter: Patentanwälte Kewitz & Kollegen

(57) **Zusammenfassung**

Die Erfindung betrifft eine Klappe zur Drosselung des Durchflusses in einem Mischwasserkanal die an einer Drehachse (2), die quer zur Strömungsrichtung angeordnet ist, mit zumindest teilweise einer Klappenform gemäß dem Kanalquerschnitt, mit einer Antriebseinheit (4, 5), die die Klappe (1) in eine Vielzahl von Positionen um die Drehachse (2) schwenkt, mit einer Durchflussmessung (14) im Kanal und einer Steuereinheit (15), die die Antriebseinheit (4, 5) steuert.

## Beschreibung

Die Erfindung betrifft eine Drossel und Absperreinrichtung, mit der es möglich ist, in Abwasserkanälen die Abflussmenge zu verändern und zu bestimmen.

Das beabsichtigte Einsatzgebiet dieser Drosseleinrichtung sind Mischwasserkanäle, in denen neben den im jeweiligen Einzugsgebiet entstehenden häuslichen bzw. kommunalen Abwässern auch, speziell bei Niederschlägen, erhebliche Regenwassermengen transportiert werden müssen. Um die Kanalisation nicht für die bei einem starken Regen anfallenden, ganz erheblichen, Wassermengen auslegen zu müssen, wird nur jeweilig eine gemäß bestehenden Vorschriften genau berechnete, mittels einer Drosseleinrichtung konstant gehaltene Wassermenge, in Richtung Kläranlage weitergeleitet. Das übrige nachfließende, durch das Regenereignis stark verdünnte, Abwasser wird dann über eine so genannte Entlastung direkt aus dem Kanalisationsnetz ab- und einem Vorfluter zugeführt. Neben der Einstellung der gewünschten, in der jeweiligen wasserrechtlichen Genehmigung, zugelassenen Abflussmenge des betreffenden Kanalabschnittes kann mit einer solchen Drosselklappe zudem das oberhalb liegende Kanalvolumen als Stau- bzw. Speicherraum aktiviert und in der wasserrechtlichen Berechnung als solches angesetzt werden. Unter günstigen Umständen, speziell bei Mischwasserkanälen mit großen Querschnitten, kann somit ein erhebliches zusätzliches Speichervolumen aktiviert werden, was dazu führt, dass eventuell notwendige externe Speicher wie spezielle Kanalstauräume oder Regenbecken in ihrem Volumen reduziert werden bzw. ganz entfallen können. Weiterhin kann das gewonnene zusätzliche Speichervolumen zu einer Vergleichmäßigung des Kläranlagenzuflusses und damit zu einer Optimierung des Kläranlagenbetriebes genutzt werden.

Die Erfindung hat die Aufgabe eine Drossel und Absperreinrichtung bereitzustellen, mit der es möglich ist, in Abwasserkanälen die Abflussmenge zu verändern und zu bestimmten, wobei einstell- und wählbare Sollwerte einzurichten und einzuhalten sein sollen.

Diese Aufgabe wird durch die Erfindung mit den Merkmalen der unabhängigen Ansprüche gelöst. Vorteilhafte Weiterbildungen der Erfindungen sind in den Unteransprüchen gekennzeichnet.

Im Einzelnen handelt es sich um eine Klappe zur Drosselung des Durchflusses in einem Mischwasserkanal, die an einer Drehachse angebracht ist, die quer zur Strömungsrichtung angeordnet ist, und somit im Kanal eine Pendelbewegung ausführen kann.

Diese weist zumindest teilweise eine Klappenform gemäß dem Kanalquerschnitt auf. In einigen Ausführungsformen ist der obere Bereich des Kanals nicht verdeckt, so dass das Wasser hier über den Klappenrand strömen kann. Dieser Ansatz verhindert, dass der Kanal verstopft, wenn die Mechanik der Klappe versagt oder es zu einer Verkeilung der Klappe kommt. Die Achslage ist symmetrisch oder asymmetrisch im Verhältnis zur Größe des Kanals oder im Verhältnis zur Größe der Klappe.

Durch eine Antriebseinheit kann die Klappe vorzugsweise stufenlos in eine Vielzahl von Positionen um die Drehachse geschwenkt werden. Die Antriebseinheit kann sowohl auf der Platte selber angeordnet sein, als auch innerhalb des Abwasserkanals im Kanalscheitel oder auf einer im Abwasserkanal befindlichen Halterung, die wiederum fest mit der Kanalwand verbunden ist oder auch in einem geschützten Bereich außerhalb des Kanals. Der Antrieb kann entweder über eine Hydraulik-, eine Pneumatik- oder ein mechanisches System realisiert werden. Das mechanische System kann entweder über Stößel, Kolben, Ketten, Zahnräder oder Nockenwellen gesteuert sein.

Eine Steuerung, die die Antriebseinheit steuert, wird über eine Durchflussmessung geregelt, die oberhalb oder unterhalb der Klappe angeordnet ist. Somit kann festgelegt werden, welche Durchflussmenge zu einem bestimmten Zeitpunkt realisiert werden soll. Die Steuerung kann abhängig sein vom Wasserstand vor der Klappe, vom Wasserstand hinter der Klappe, von der Menge an Wasser, die zu einem bestimmten Zeitpunkt hinzukommt, und durch die Menge, die abfließen soll. Weitere Parameter sind einstellbar und denkbar. Die Einstellung erfolgt vorzugsweise durch eine Menüführung. Es ist denkbar, dass die Steuerung und Einstellung über Funk erfolgen kann, sodass eine zentrale Einstellung möglich ist, ohne in den Kanal steigen zu müssen. Längere Kabelverbindungen sind ebenfalls denkbar. Vorzugsweise werden Mikrocontroller gesteuerte Einheiten oder SPS-System eingesetzt, die die Steuerung oder Regelung der Klappe bestimmen.

In einer bevorzugten Ausführungsform sind die Antriebseinheit und Steuereinheit so fein ausgebildet, dass die Einstellung einer gewünschten konstanten oder stufenlos veränderbaren Öffnungsweite und damit Durchflussmenge erlaubt wird. In der Regel handelt es sich hierbei um einen Regelprozess mit einigen Sensoren vor und hinter der Klappe. In einer weiteren Ausführungsform ist die Antriebseinheit und Steuereinheit so ausgebildet, dass die Einstellung einer gewünschten Rückstauhöhe erlaubt wird.

Weiterhin weist die Außenkante der Klappe eine radial umlaufende aktive Dichtung auf, die ihren Querschnitt durch pneumatische oder hydraulische Einwirkung verändert und somit eine Abdichtung zur Kanalwand erzeugt. Die entsprechenden Pumpen sind ebenfalls auf der Klappe angeordnet. Es ist jedoch denkbar, dass die Abdichtung invers erfolgt, wobei die Dichtungen im Kanal Bereich angeordnet sind, die dann gegen die Klappe drücken.

In einer weiteren alternativen Ausführungsform ist eine Hohlraumdichtung vorhanden, die gegen einen Hilfsrahmen dichtet, der an der Kanalwand umlaufend befestigt ist.

Zur besser Installation ist die Klappentafel durch waagerechte oder senkrechte Teilfugen in Segmente geteilt. Hierdurch kann die Klappe einfacher in den Kanal geführt werden. Die Segmente werden im Abwasserkanal mittels Verbindungsbolzen zur Klappentafel verbunden.

In einer weiteren Ausführung zur Steuerung der Flussmenge, die auch mit der vorher genannten Ausführungsform verbunden werden kann als auch mit anderen Sperrsystemen verwendet werden kann, wird auf eine bewegliche Absperreinheit zur Drosselung des Durchflusses in einem Mischwasserkanal, eine selbststeuernde Feindrosseleinrichtung verwendet, die auf der Absperreinheit montiert ist, und einen Durchfluss durch einen Durchbruch der Absperreinheit steuert. Alternativ kann auch eine Pumpe verwendet werden, die durch Rohre die beiden Seiten einer Absperreinheit verbindet.

Die Feindrosseleinrichtung ist eine Pumpe, eine Drosselklappe, ein Drosselventil oder ein Drosselschieber. Diese Elemente werden mechanisch, hydraulisch oder pneumatisch, geöffnet und geschlossen, wobei der Mechanismus auf der Absperreinheit angeordnet ist.

Die Feindrosseleinrichtung ist durch ein Steuergerät selbständig gesteuert oder geregelt, das auf der Absperreinheit angeordnet ist, und das durch Mess-Sensoren, wie Schwimmern, Umgebungsgrößen erfasst.

Das Steuergerät ist auf der Absperreinheit angeordnet und erfasst durch Mess-Sensoren, wie Schwimmer, die Umgebungsgrößen.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:
- Fig. 1a: eine schematische Schnittansicht der Drosselklappe mit einer autarken Feinsteuerung;
- Fig. 1b: eine schematische Schnittansicht der Drosselklappe mit einer autarken Feinsteuerung in einem Längsschnitt;
- Fig. 1c-d: unterschiedliche Formen der Segmentierung der Drosselklappe, die den Einbau erleichtert;
- Fig. 2a: eine schematische Schnittansicht einer Feinregulierung mit einer Pumpe, die mittels Flansch mit der Absperreinrichtung verbunden ist und durch einen Durchbruch in der Absperreinrichtung fördert;
- Fig. 2b: eine schematische Schnittansicht einer Feinregulierung mit einer Pumpe, die auf die Absperreinrichtung aufgebaut und um die Absperreinrichtung herum oder darüber mittels Rohrleitung oder Schlauch fördert;
- Fig. 3a: eine schematische Schnittansicht einer Feinregulierung mit einem Schieber;
- Fig. 3b: eine schematische Schnittansicht einer Feinregulierung mit einem Ventil;
- Fig. 4a: eine schematische Schnittansicht einer Feinregulierung mit einer schwimmergesteuerten Drosseleinrichtung;
- Fig. 4b: eine schematische Schnittansicht einer Feinregulierung mit einer über hydraulische Effekte arbeitenden Drosseleinrichtung.

Die beschriebene Drosselklappe hat den entscheidenden Vorteil, dass hiermit die ablaufende Wassermenge bei nahezu vollständiger Querschnittsfreigabe vom Maximum, entsprechend hydraulischer Kapazität des Kanalquerschnittes, bis auf nahezu null eingestellt werden kann und eröffnet damit völlig neue Steuerungsmöglichkeiten im Kanalnetzes.

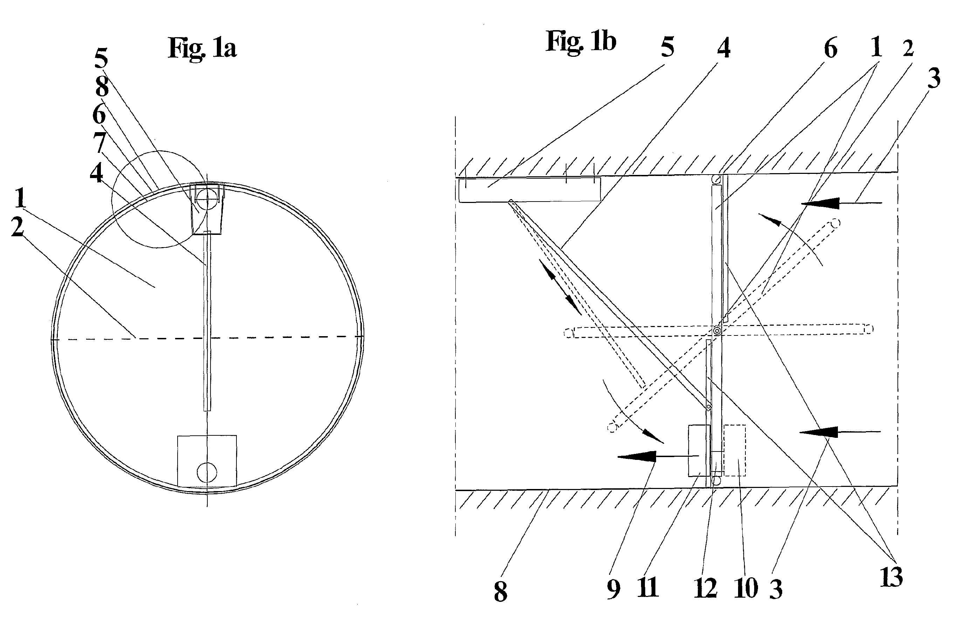

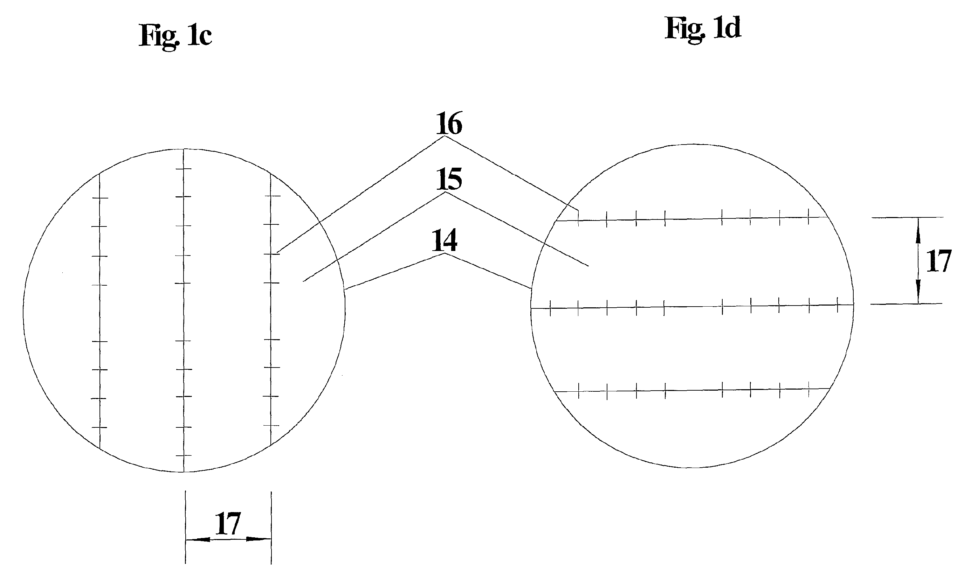

Die Figuren 1 a und b zeigen die Absperreinrichtung als Drosselklappe (1), wobei diese die Form des Kanalprofils hat und wobei ihre Oberkante nicht den Kanalscheitel erreichen muss, über ihr also auch ein freier Querschnitt in Halbmondform verbleiben kann. Ihre Drehachse (2) liegt quer zur Strömungsrichtung (3) des Wassers. Über eine Stößelstange (4) wird die Klappe von einer Antriebseinheit (5) betätigt. Mittels Dreh- bzw. Schwenkbewegung der Klappe wird der freie Querschnitt des Abwasserkanals reduziert und entsprechend der Klappenposition ein Drosseleffekt erzielt. Zusätzlich kann die Klappe mit einer radial umlaufenden Dichtung (6), die an der Klappenaußenkante (7) befestigt ist und den Ringspalt zur Kanalwand (8) abdichtet, ausgestattet werden und somit den vollständigen Verschluss des Kanalquerschnittes herbeiführen. Die ablaufende Wassermenge (9) kann in dieser Klappenposition sehr genau auch bei kleinen Ablaufmengen gesteuert werden, in dem vor (10) oder nach (11) einem Durchbruch (12) in dieser Klappe eine Feindrossel- bzw. Ablaufregeleinrichtung angebracht wird. In Verbindung mit einer Durchflussmessung im Kanal unterhalb der Klappe kann die Ablaufmenge gemäß den technischen Möglichkeiten und hydraulischen Gegebenheiten in weiten Bereichen geregelt werden.

Wird keine umlaufende aktive Dichtung verwendet, kann die Abdichtung auch mittels Hilfsrahmen (13) geschehen, gegen den der Antrieb die Klappe verpresst.

Die Klappentafel (14) selbst kann durch Teilfugen, z.B. vertikal (Fig. 1c) oder horizontal (Fig.1d) in entsprechende Segmente (15) geteilt sein, die im Abwasserkanal mittels Verbindungsbolzen (16) verbunden werden. Die Maße der Segmente, speziell die Breite (17) wird bestimmt von der Größe einer vorhandenen und für die Montage genutzten Einstiegsöffnung in den Kanal, liegt jedoch immer unter der Gesamtbreite bzw. Gesamthöhe der Klappentafel.

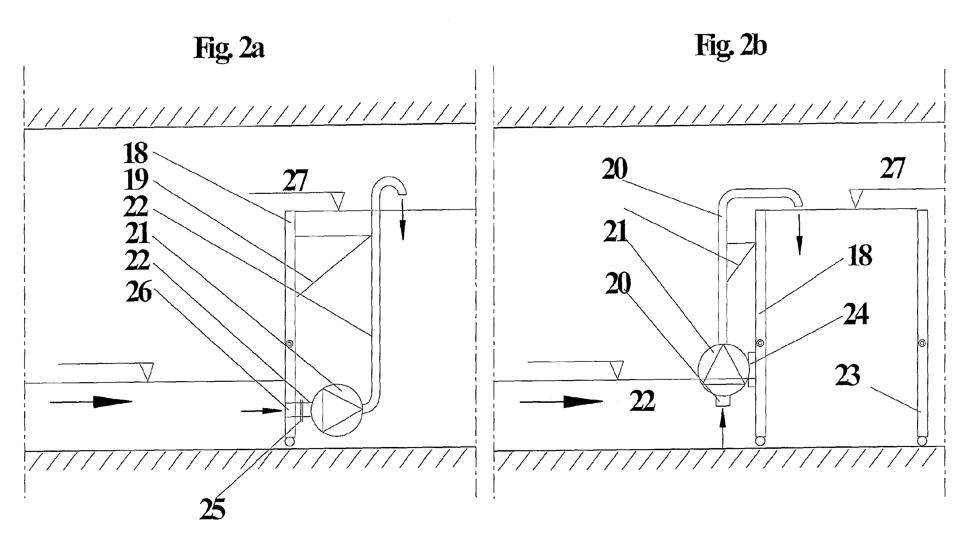

Eine Pumpe (21) kann gem. Fig. 2a an einer Absperreinrichtung mittels Flanschverbindung (25) befestigt sein und durch einen Durchbruch (26) in der Tafel der Absperreinrichtung (18) mittels einer Rohrleitung (22) fördern. Die Rohrleitung kann mittels Halterung (19) an der Absperreinrichtung befestigt sein. Beim Bewegen der Absperreinrichtung bewegt sich die Pumpe entsprechend mit.

Gemäß Fig. 2b kann eine Pumpe (21) auch mittels einer Konsole (24) an der Tafel (18) einer Absperreinrichtung befestigt sein. Dann befindet sich die Pumpe selbst im angesaugten Medium (22) und fördert über die Rohrleitung (20) das Medium über die Absperreinrichtung (18). Beim Bewegen der Absperreinrichtung bewegt sich die Pumpe entsprechend mit.

Weiterhin kann zwischen dieser und einer Zweiten Absperreinrichtung (23) damit ein Aufstau (27) erzeugt werden.

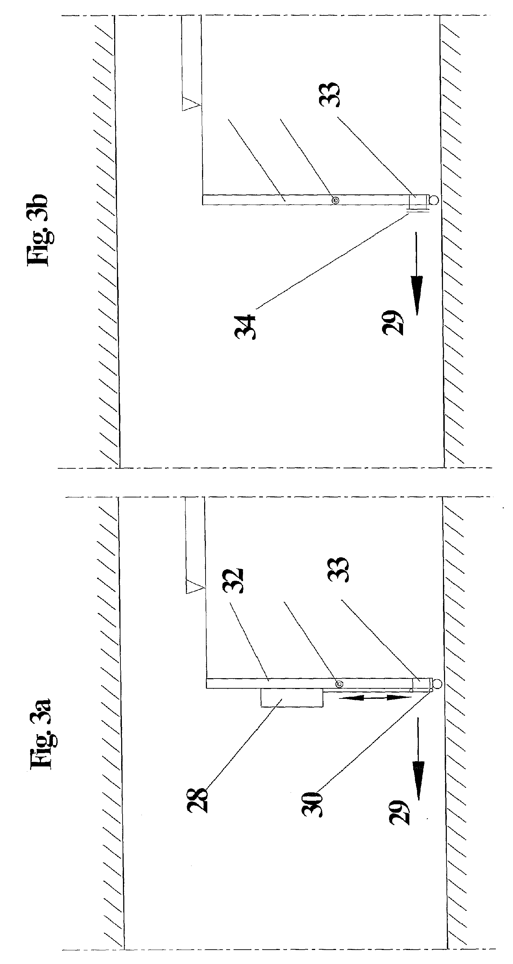

Gem. Fig. 3a kann durch eine zugefahrene und abgedichtete Absperreinrichtung (32) in der sich ein Durchbruch (33) befindet durch diesen Durchbruch eine gewisse Wassermenge strömen. Mittels einer vor diesem Durchbruch befindlichen und zur Klappe abgedichteten Schiebertafel (30), die über einen Antrieb (28) bewegt wird ist die ausströmende Wassermenge (29) veränderbar.

Gem. Fig. 3b kann die abströmende Wassermenge (29) auch mittels eines vor diesem Durchbruch (33) befindlichen Regelventil (34) verändert werden.

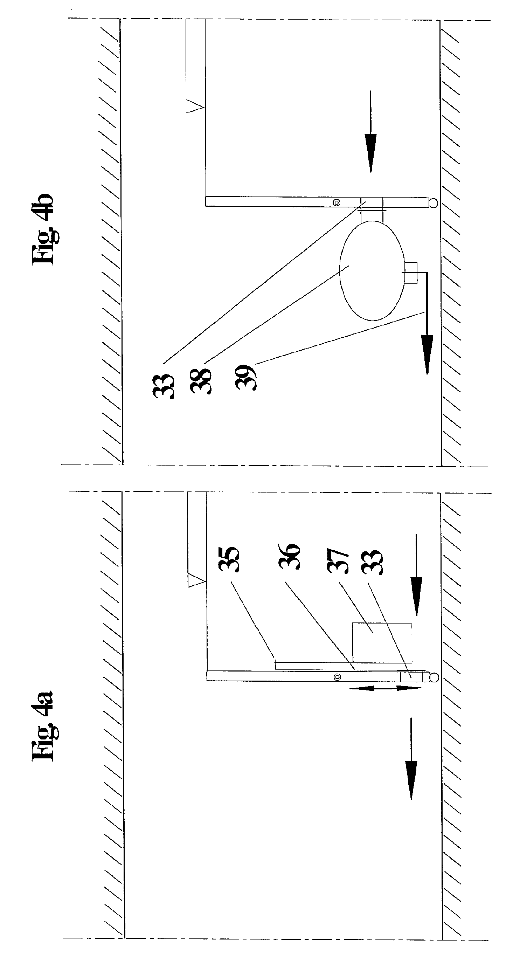

Gem. Fig. 4a ist die durch diesen Durchbruch strömende Wassermenge ebenfalls mittels einer vor oder hinter dem Durchbruch befindlichen verschieb- oder schwenkbaren Drosselblende (36) veränderbar. Die Drosselblende kann von einem Schwimmer(37) über ein Schwimmergestänge (35) bewegt werden.

Gem. Fig. 4b kann dies Wassermenge (39) auch mittels einer Drosseleinrichtung (38), die über hydraulische Effekte arbeitet, und vor oder hinter den Durchbruch (33) montiert ist, verändert werden.

## Patentansprüche

1. Klappe zur Drosselung des Durchflusses in einem Mischwasserkanal
- die an einer Drehachse (2), die quer zur Strömungsrichtung angeordnet ist,
- mit zumindest teilweise einer Klappenform gemäß dem Kanalquerschnitt,
- mit einer Antriebseinheit (4, 5), die die Klappe (1) in eine Vielzahl von Positionen um die Drehachse (2) schwenkt,
- mit einer Durchflussmessung (14) im Kanal und einer Steuereinheit (15), die die Antriebseinheit (4, 5) steuert.

2. Klappe nach dem vorhergehenden Anspruch, **dadurch gekennzeichnet, dass** an der Außenkante (7) der Klappe eine radial umlaufende aktive Dichtung (6) vorhanden ist, die ihren Querschnitt durch pneumatische oder hydraulische Einwirkung verändert und somit eine Abdichtung zur Kanalwand (8) erzeugt.

3. Klappe nach einem oder mehreren der vorhergehenden Ansprüche, **dadurch gekennzeichnet, dass** die Achslage symmetrisch oder asymmetrisch im Verhältnis zur Größe des Kanals und/oder im Verhältnis zur Größe der Klappe ist.

4. Klappe nach einem oder mehreren der vorhergehenden Ansprüche, **dadurch gekennzeichnet, dass** die Antriebseinheit und/oder Steuereinheit, die Einstellung einer gewünschten konstanten oder stufenlos veränderbaren Öffnungsweite und damit Durchflussmenge erlaubt.

5. Klappe nach einem oder mehreren der vorhergehenden Ansprüche, **dadurch gekennzeichnet, dass** die Antriebseinheit und/oder Steuereinheit die Einstellung einer gewünschten Rückstauhöhe erlaubt.

6. Klappe nach einem oder mehreren der vorhergehenden Ansprüche, **dadurch gekennzeichnet, dass** eine stufenlose Einstell- und Regelbarkeit der Klappe mittels der im Kanal angebrachten Antriebseinheiten gegeben ist.

7. Klappe nach einem oder mehreren der vorhergehenden Ansprüche, **dadurch gekennzeichnet, dass** die Übertragung der Betätigungskraft zwischen Antriebseinheit und Klappe mittels Stößelstange (4) erfolgt.

8. Klappe nach einem oder mehreren der vorhergehenden Ansprüche, **dadurch gekennzeichnet, dass** eine Hohlraumdichtung vorhanden ist, die gegen einen Hilfsrahmen dichtet, der an der Kanalwand umlaufend befestigt ist.

9. Klappe nach einem oder mehreren der vorhergehenden Ansprüche, **dadurch gekennzeichnet, dass** die Klappentafel durch waagerechte und/oder senkrechte Teilfugen in Segmente geteilt ist.

10. Klappe nach dem vorhergehenden Anspruch, **dadurch gekennzeichnet, dass** die Segmente im Abwasserkanal mittels Verbindungsbolzen zur Klappentafel verbindbar sind.

11. Klappe nach dem vorhergehenden Anspruch, **gekennzeichnet, durch** die Merkmale eines oder mehrerer der folgenden Ansprüche.

12. Bewegliche Absperreinheit zur Drosselung des Durchflusses in einem Mischwasserkanal, **gekennzeichnet durch** eine Feindrosseleinrichtung, die auf der Absperreinheit montiert ist, und einen Durchfluss **durch** einen Durchbruch der Absperreinheit steuert.

13. Bewegliche Absperreinheit nach dem vorhergehenden Anspruch, **dadurch gekennzeichnet, dass** die Feindrosseleinrichtung eine Pumpe und/oder eine Drosselklappe und/oder ein Drosselventil und/oder ein Drosselschieber ist.

14. Bewegliche Absperreinheit nach einem oder mehreren der zwei vorhergehenden Ansprüche, **dadurch gekennzeichnet, dass** die Drosselklappe und/oder ein Drosselventil und/oder ein Drosselschieber mechanisch und/oder hydraulisch und/oder pneumatisch, geöffnet und geschlossen wird, wobei der Mechanismus auf der Absperreinheit angeordnet ist.

15. Bewegliche Absperreinheit nach einem oder mehreren der drei vorhergehenden Ansprüche, **dadurch gekennzeichnet, dass** die Feindrosseleinrichtung selbständig gesteuert und/oder geregelt ist, durch eine Steuergerät, das auf der Absperreinheit angeordnet ist, und das durch Mess-Sensoren, wie Schwimmern, Umgebungsgrößen erfasst.

16. Bewegliche Absperreinheit zur Drosselung des Durchflusses in einem Mischwasserkanal, **gekennzeichnet durch** eine Pumpe, die auf der Absperreinheit befestigt ist, mit einer Rohrleitung die um die Absperreinheit geführt ist, **durch** die das Mischwasser von einer Seite der Absperreinheit, **durch** die Pumpe auf die andere Seite gepumpt wird.

17. Bewegliche Absperreinheit nach einem oder mehreren der vier vorhergehenden Ansprüche, **dadurch gekennzeichnet, dass** die Feindrosseleinrichtung selbständig gesteuert und/oder geregelt ist, durch eine Steuergerät, das auf der Absperreinheit angeordnet ist, und das durch Mess-Sensoren, wie Schwimmern, Umgebungsgrößen erfasst.
